(19) Europäisches Patentamt
European Patent Office
Office européen des brevets

(11) **EP 2 560 365 A1**

(12) **EUROPEAN PATENT APPLICATION**
published in accordance with Art. 153(4) EPC

(43) Date of publication:
**20.02.2013 Bulletin 2013/08**

(51) Int Cl.:
*H04N 5/225* (2006.01)   *H04N 5/232* (2006.01)
*H04N 5/262* (2006.01)   *H04N 7/18* (2006.01)

(21) Application number: **11768695.6**

(22) Date of filing: **17.03.2011**

(86) International application number:
**PCT/JP2011/056339**

(87) International publication number:
**WO 2011/129174 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.04.2010 JP 2010093055**

(71) Applicant: **JVC KENWOOD Corporation
Kanagawa 221-0022 (JP)**

(72) Inventor: **SATO, Hiroyuki
Yokohama-shi
Kanagawa 221-0022 (JP)**

(74) Representative: **Wagner, Karl H. et al
Wagner & Geyer Partnerschaft
Patent- und Rechtsanwälte
Gewürzmühlstrasse 5
80538 München (DE)**

(54) **VIDEO IMAGE PROCESSING DEVICE AND VIDEO IMAGE PROCESSING METHOD**

(57)   A mask information generator 4 carries out the following processing: (1) defining lines which become respective sides of a polygon of which three or more points on a display screen designated by user's operation become vertices; (2) calculating a value of a coordinate in a vertical direction on each of the lines which has a value of a coordinate in a horizontal direction of each pixel designated by a counter which designates a coordinate of each pixel in an image signal based on a synchronization signal thereof; and (3) comparing a value of the coordinate designated by the counter in the vertical direction of each pixel with the calculated value of the coordinate on each of the lines, to determine whether or not each pixel in the image signal is included in a mask region which is a region within the polygon surrounded by the lines. A masking unit 5 carries out masking using a mask image with respect to each pixel included in the mask region.

FIG. 1

**Description**

**Technical Field**

The present invention relates to an image processing apparatus and an image processing method that carry out masking with respect to a region in a part of image.

**Background Art**

In a case of monitoring a public space using a monitoring camera, we should take into account a matter that a private house and the like does not become public in the light of privacy protection. Because of this, a region in a part of image captured by the monitoring camera is subject to masking processing.

For example, there has been known a technique in which a captured image is divided into blocks, a mask region is set by designating whether or not masking is carried out by each block, and an image in the mask region is subject to masking processing.

However, intheabove-describedmethodfordividing the captured image into blocks and setting a mask region, a shape of the mask region is limited to a shape in which rectangles are combined. Due to this, it is difficult to accurately trace an image of object to be protected. This frequently prevents an object to be protected from being subject to masking.

In view of the above, there has been proposed in Patent Literature 1 an image capture apparatus in which plural kinds of mask patterns such as a triangular shape, a box shape and the like are previously stored in a memory, these mask patterns are combined as necessary and overlap an captured image, and masking is carried out. Thereby, each of regions formed into different shapes can be subject to masking.

**Citation List**

**Patent Literature**

Patent Literature 1: Japanese Patent Application Laid-open Publication No.2005-229351

**Summary of Invention**

**Technical Problem**

However, in the technique of Patent Literature 1, it is necessary to prepare frame memories for storing mask patterns whose the number corresponds to the number of mask patterns, which brings the increase in the size of apparatus configuration.

Also, the mask patterns can be obtained by enlarging, reducing or rotating a base mask pattern, but the base mask pattern has been previously stored in a memory. Because of this, even if various mask patterns have been stored, the degree of freedom for setting a shape of region to be subject to masking is limited.

The present invention is devised in view of the above-described problem, whose an object is to provide an image processing apparatus and an image processing method capable of increasing the degree of freedom for setting a shape of a region to be subject to masking in an image while suppressing the increase in the size of apparatus configuration.

**Solution to Problem**

In order to achieve the above-described object, an image processing apparatus according to the present invention includes: an image obtaining unit configured to obtain an image signal and a synchronization signal thereof; a designating unit configured to designate three or more points on a display screen where an image based on the image signal is displayed, according to user's operation; a defining unit configured to define lines which become respective sides of a polygon of which the points designated by the designating unit become vertices; a coordinate designating unit configured to designate a coordinate in a horizontal direction and in a vertical direction of each pixel in the image signal on the display screen based on the synchronization signal; a coordinate calculator configured to calculate a value of a coordinate on each of the lines, which has a value of the coordinate designated by the coordinate designating unit in one direction of the horizontal direction and the vertical direction of each pixel, in the other direction different from the one direction; a determining unit configured to compare a value of the coordinate designated by the coordinate designating unit in the other direction of each pixel with the value of the coordinate on each of the lines calculated by the coordinate calculator, to determine whether or not each pixel in the image signal is included in a mask region which is a region within the polygon surrounded by the lines; and a masking unit configured to carry out masking using a mask image with respect to each pixel included in the mask region.

Further, an image processing method according to the present invention in an image processing apparatus that obtains an image signal and a synchronization signal thereof, designates a coordinate in a horizontal direction and in a vertical direction of each pixel in the image signal on a display screen based on the synchronization signal using a coordinate designating unit, and displays an image based on the image signal on the display screen, includes: designating three or more points on the display screen according to user's operation to define lines which become respective sides of a polygon of which the designated points become vertices; calculating a value of a coordinate on each of the lines, which has a value of the coordinate designated by the coordinate designating unit in one direction of the horizontal direction and the vertical direction of each pixel, in the other direction different from the one direction; comparing a value of the coordinate designated by the coordinate designating unit in the other direction of each pixel with the value of the coordinate on each of the lines calculated by the calculating, to determine whether or not each pixel in the image signal is included in a mask region which is a region within the polygon surrounded by the lines; and carrying out masking using a mask image with respect to each pixel included in the mask region.

**Advantageous Effects of Invention**

According to the image processing apparatus and the image processing method of the present invention, it is realized to increase the degree of freedom for setting a shape of a region to be subject to masking in an image while suppressing the increase in the size of apparatus configuration.

**Brief Description of Drawings**

[FIG. 1] FIG. 1 is a block diagram that illustrates a configuration of an image processing apparatus according to an exemplary embodiment of the present invention.
[FIG. 2] FIG. 2 is a diagram that illustrates regions separated by a line.
[FIG. 3] FIG. 3 is a diagram that illustrates a region surrounded by four lines.
[FIG. 4] FIG. 4 is a diagram that illustrates a line passing through two points.
[FIG. 5] FIG. 5 is a configuration diagram of a mask information generator in the image processing apparatus shown in FIG. 1.
[FIG. 6] FIG. 6 is a configuration diagram of an offset calculator in the mask information generator shown in FIG. 5.
[FIG. 7] FIG. 7 is an explanatory diagram of a block coordinate. [FIG. 8] FIG. 8 is a configuration diagram of a coordinate calculator in the mask information generator shown in FIG. 5.
[FIG. 9] FIG. 9 is an explanatory diagram of comparator in the mask information generator shown in FIG. 5.
[FIG. 10] FIG. 10 is an explanatory diagram of a coordinate calculation result by the coordinate calculator shown in FIG. 8.
[FIG. 11] FIG. 11 is an explanatory diagram of one example of a user interface for setting a mask region.

**Description of Embodiments**

An exemplary embodiment of the present invention will be described below with reference to the drawings.

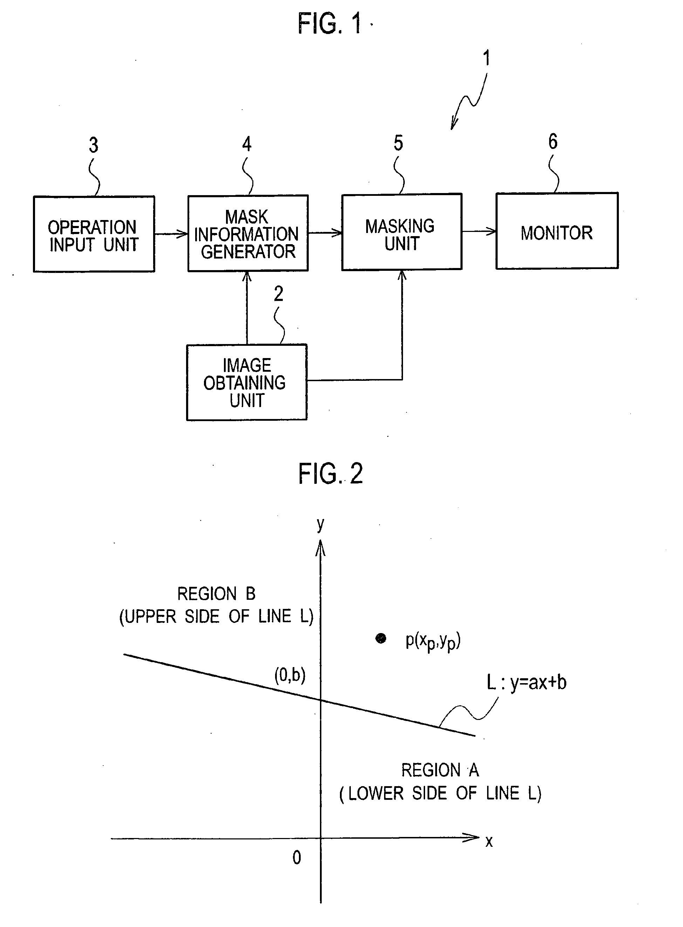

FIG. 1 is a block diagram that illustrates a configuration of an image processing apparatus according to the exemplary embodiment of the present invention. As shown in FIG. 1, an image processing apparatus 1 according to the present embodiment includes an image obtaining unit 2, an operation input unit 3, a mask information generator 4, a masking unit 5 and a monitor 6.
The image obtaining unit 2 has an image-capturing function, and outputs an image signal including a luminance signal and a color-difference signal obtained by capturing an object image and a synchronization signal thereof. The synchronization signal includes a horizontal synchronization signal, a vertical synchronization signal and a clock signal. It is noted that the image obtaining unit 2 may obtain an image signal externally captured by an image-capturing device and a synchronization signal thereof.
The operation input unit 3 receives user's operation and outputs an operation signal according to the operation. In the present embodiment, a user operates the operation input unit 3 and designates points (three or more) which become vertices of a region to be subject to masking in a display screen of the monitor 6 where an image is displayed. This allows a mask region surrounded by lines (three or more) whose the number is equal to the number of designated points, to be set. The operation input unit 3 functions as a designating unit configured to designate each point (pixel position) which becomes a vertex of a mask region according to user's operation, and outputs mask position information representing a coordinate of each point.

The mask information generator 4 determines whether or not each pixel in an image signal is included in a mask region which is a region in a polygon of which each point designated by user' s operation becomes a vertex, and outputs mask information representing the result.

Based on mask information input from the mask information generator 4, the masking unit 5 carries out masking processing for each pixel included in a mask region in an image signal, using a mask image.

The monitor 6 includes a liquid crystal display and the like, and displays in the display screen an image where a mask region has been subject to masking in the masking unit 5.

Here, a way of mask region determination in the present embodiment will be described.

In order to know which a point "P" $(x_p, y_p)$ on x-y coordinates shown in FIG. 2 is located in a region "A" or "B" separated by a line "L" represented by $y = ax + b$, it is only necessary to check whether or not the following inequalities of (Eq. 1) and (Eq. 2) are satisfied.

$$y_p < ax_p + b \quad \cdots \text{(Eq. 1)}$$

$$y_p > ax_p + b \quad \cdots \text{(Eq. 2)}$$

If (Eq. 1) is satisfied, the point "P" is located in the region "A", and if (Eq. 2) is satisfied, the point "P" is located in the region "B".

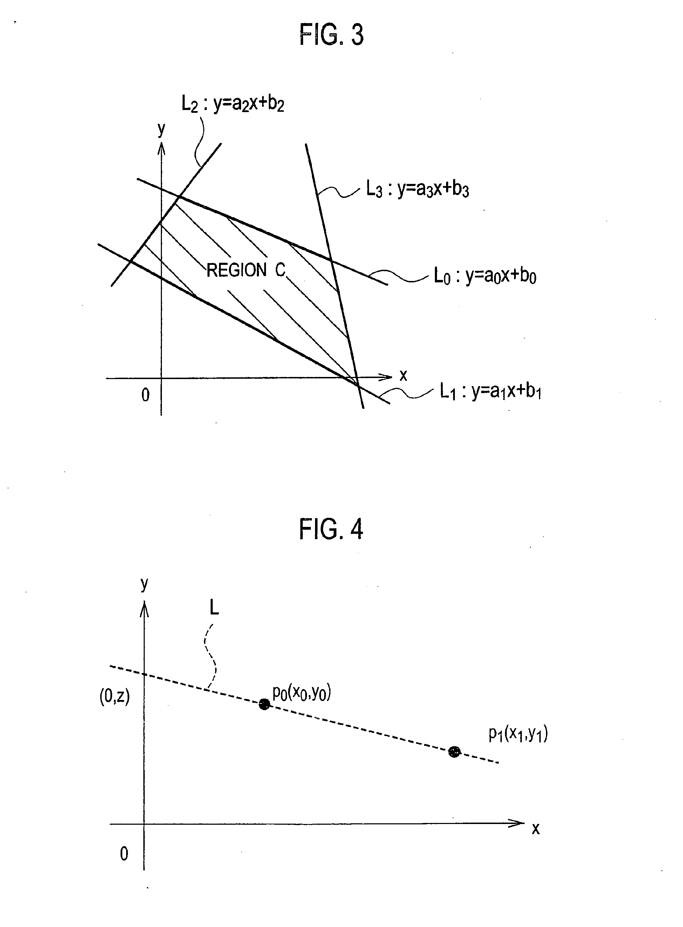

Accordingly, regarding a point in a region "C" surrounded by four lines $L_0$ to $L_3$ shown in FIG. 3 ($L_0 : y = a_0x + b_0$, $L_1 : y = a_1x + b_1$, $L_2 : y = a_2x + b_2$, $L_3 : y = a_3x + b_3$), the following four inequalities of (Eq. 3) to (Eq. 6) are satisfied, for example.

$$y < a_0x + b_0 \quad \cdots \text{(Eq. 3)}$$

$$y > a_1x + b_1 \quad \cdots \text{(Eq. 4)}$$

$$y < a_2x + b_2 \quad \cdots \text{(Eq. 5)}$$

$$y < a_3x + b_3 \quad \cdots \text{(Eq. 6)}$$

On the other hand, a line passing through two points "$p_0$" $(x_0, y_0)$ and "$p_1$" $(x_1, y_1)$ on the x-y coordinates shown in FIG. 4 is represented as follows while y-intercept is defined as "z".

$$y = \{(y_1 - y_0) / (x_1 - x_0)\} x + z$$

When this is transformed into a line in which the point "$p_0$" is set to the origin, the following is obtained.

$$y - y_0 = \{(y_1 - y_0) / (x_1 - x_0)\} (x - x_0)$$

If

$$\alpha = (y_1 - y_0), \quad \beta = (x_1 - x_0),$$

$$y - y_0 = (\alpha/\beta) (x - x_0).$$

Thereby,

$$y = (\alpha/\beta) x - (\alpha/\beta) x_0 + y_0 \quad \cdots \quad (Eq. \ 7)$$

Thus, the line passing through two points "$p_0$" $(x_0, y_0)$ and "$p_1$" $(x_1, y_1)$ is defined by a slope $\alpha/\beta$ ($\alpha = (y_1 - y_0)$, $\beta = (x_1 - x_0)$) and an offset $(-(\alpha/\beta) x_0 + y_0)$ corresponding to the y-intercept. When coordinates of two points and a slope defining a line are determined, the offset becomes a fixed value.

In the present embodiment, in a case where four points are designated for example, the mask information generator 4 defines four lines which are respective sides of quadrangle having the designated four points as vertices thereof according to (Eq. 7), determines whether or not each pixel in the image signal is included in the quadrangle which is a mask region based on the inequalities of (Eq. 3) to (Eq. 6) corresponding to the defined respective lines, and outputs mask information representing the result.

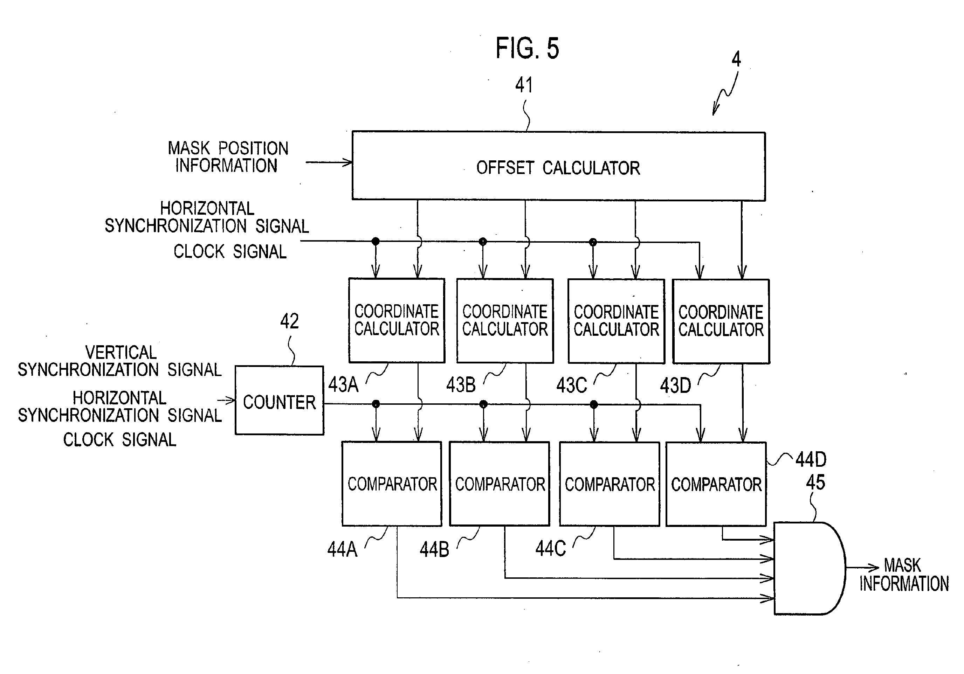

The configuration of mask information generator 4 carrying out such processing is shown in FIG. 5. As shown in FIG. 5, the mask information generator 4 includes an offset calculator 41, a counter (coordinate designating unit) 42, coordinate calculators 43A to 43D, comparators 44A to 44D, and an AND circuit 45. FIG. 5 illustrates a configuration example in a case where a region in a quadrangle surrounded by four lines is set to a mask region. Four coordinate calculators and four comparators are provided so as to correspond to the number of lines.

Based on mask position information representing coordinates of four points designated by user's operation, the offset calculator 41 calculates slopes and offsets of four lines which are respective sides of quadrangle having the designated four points as vertices thereof. The offset calculator 41 corresponds to a defining unit of the present invention.

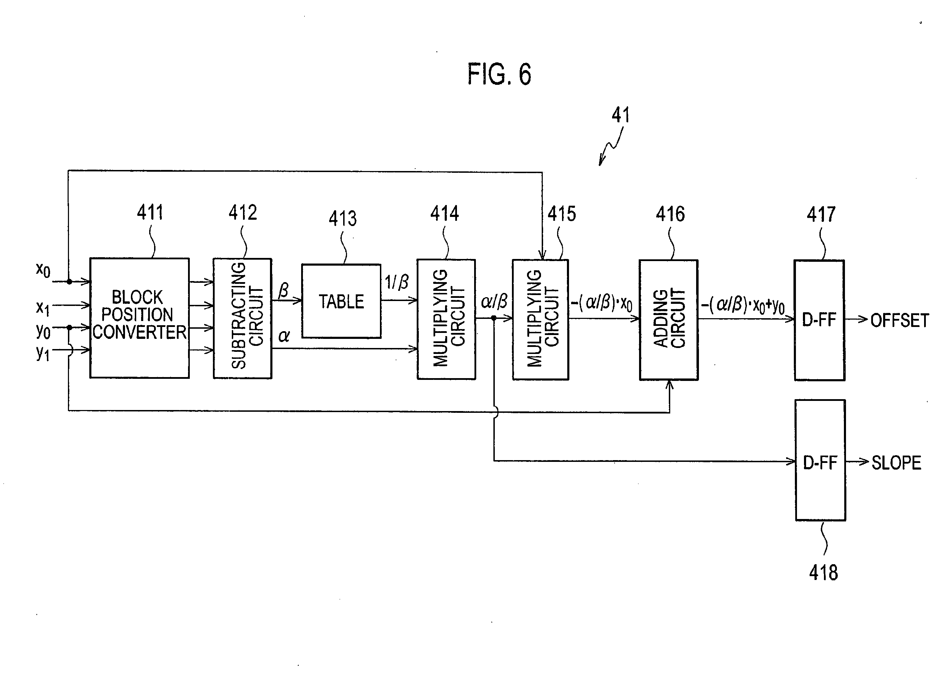

The configuration of offset calculator 41 is shown in FIG. 6. As shown in FIG. 6, the offset calculator 41 includes a block position converter 411, a subtracting circuit 412, a table 413, multiplying circuits 414 and 415, an adding circuit 416, and D-FFs (D-type flip-flops) 417 and 418.

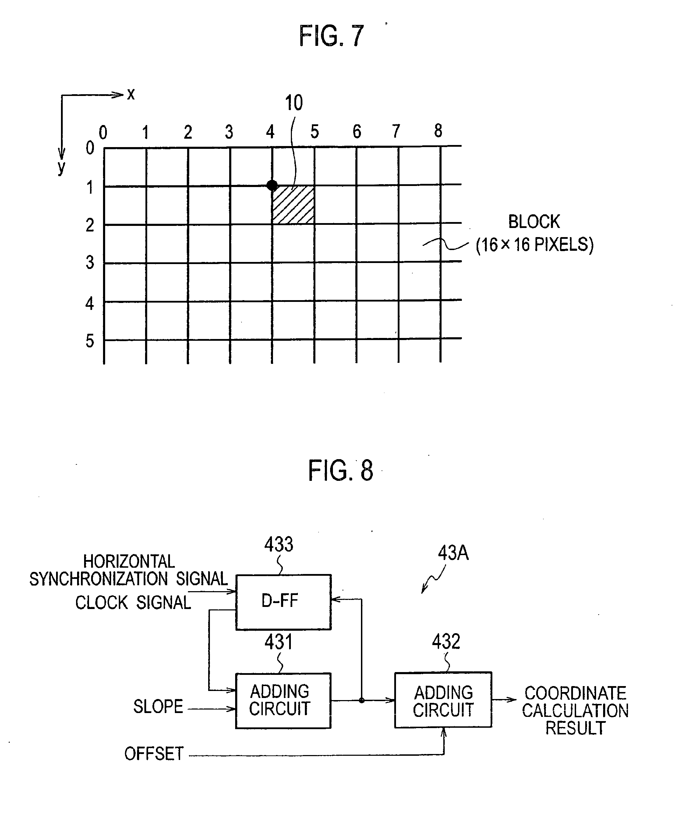

The block position converter 411 converts a coordinate of point designated as a vertex of mask region into a coarse block coordinate shown in FIG. 7. For example, as shown in FIG. 7, the block position converter 411 divides an image space into blocks each of which is composed of sixteen pixels in the horizontal direction (x-direction in the drawing) and sixteen pixels in the vertical direction (y-direction in the drawing) (16*16 pixels), and converts coordinates of pixels in each block into a block coordinate of a point on the upper left of each block in the drawing. For example, a coordinate of each pixel included in the block 10 of FIG. 7 is converted into a block coordinate (4, 1).

The subtracting circuit 412 calculates "$\alpha$" and "$\beta$" in (Eq. 7) based on coordinates converted by the block position converter 411. If coordinates of two points $(x_0, y_0)$ and $(x_1, y_1)$ are converted into $(x'_0, y'_0)$ and $(x'_1, y'_1)$ by the block position converter 411, the subtracting circuit 412 calculates $\alpha = (y'_1 - y'_0)$ and $\beta = (x'_1 - x'_0)$.

The table 413 holds values of "$\beta$" and "$1/\beta$" associated with each other therein. When a value of "$\beta$" is input from the subtracting circuit 412, a value of "'$1/\beta$" associated with it is output.

Thus, since the value of "$1/\beta$" is obtained by carrying out not subtraction but instead table lookup, it is possible to suppress the increase in the size of circuit. Further, since the value of "$1/\beta$" is obtained from the value of "$\beta$" calculated based on a coarse block coordinate converted by the block position converter 411, it is possible to minimize patterns for the value of "$\beta$" to reduce the size of table, which suppresses the increase in the size of circuit.

If each block in the block position converter 411 is too large in size, there is a possibility that the block coordinate conversion has a lot of influence on the shape of mask region. Thus, the size of block is set to that enough to ignore the influence on the shape of mask region.

The multiplying circuit 414 multiplies "$\alpha$" input from the subtracting circuit 412 by "$1/\beta$" input from the table 413 to obtain a slope "$\alpha/\beta$".

The multiplying circuit 415 multiplies by "$x_0$" the slope "$\alpha/\beta$" calculated by the multiplying circuit 414, and inverts positive and negative to obtain "$-(\alpha/\beta) x_0$".

The adding circuit 416 adds "$y_0$" to "$-(\alpha/\beta) x_0$" calculated by the multiplying circuit 415 to obtain an offset "$\{-(\alpha/\beta) x_0 + y_0\}$".

The D-FFs 417 and 418 respectively hold the offset "$\{-(\alpha/\beta) x_0 + y_0\}$" calculated by the adding circuit 416 and the slope "$\alpha/\beta$" calculated by the multiplying circuit 414, and outputs them to one of the coordinate calculator 43A to 43D.

By the above-described configuration, the offset calculator 41 calculates the slopes and offsets of four lines and outputs them to the coordinate calculator 43A to 43D corresponding to respective lines.

The counter 42 designates a position (coordinate) of each pixel in an image signal on the display screen based on a synchronizing signal (horizontal synchronizing signal, vertical synchronizing signal and clock signal) supplied from the image obtaining unit 2, and outputs the position information to the comparators 44A to 44D.

The coordinate calculators 43A to 43D carry out calculation corresponding to the right-hand side of (Eq. 7) based on the slopes and offsets of respective lines input from the offset calculator 41.

The configuration of coordinate calculator 43A is shown in FIG. 8. The coordinate calculators 43B to 43D have the same configuration as it. As shown in FIG. 8, the coordinate calculator 43A includes adding circuits 431 and 432 and a D-FF 433.

The right-hand side of (Eq. 7) is composed of a variable part "$(\alpha/\beta) x$" which varies according to an x-coordinate in the image space and an offset "$\{-(\alpha/\beta) x_0 + y_0\}$" which has a fixed value. In the coordinate calculator 43A, the variable part "$(\alpha/\beta) x$" is calculated by the adding circuit 431 and the D-FF 433.

The horizontal synchronizing signal representing an effective range in the horizontal direction (x-direction) in the display screen, and the clock signal used to carry out imaging processing by one pixel are input into the D-FF 433. The D-FF 433 obtains a calculation result of the adding circuit 431 by one clock cycle and holds it, and outputs to the adding circuit 431 a calculation result of the adding circuit 431 obtained in the last clock cycle. A value held by the D-FF 433 is reset to "0" at the time when the horizontal synchronizing signal rises.

The adding circuit 431 adds a slope "$\alpha/\beta$" to an input value from the D-FF 433 and then outputs a calculation result.

Thus, the variable part "$(\alpha/\beta) x$" of the right-hand side of (Eq. 7) is calculated by carrying out accumulation and addition of a slope "$(\alpha/\beta)$" by one clock using the adding circuit 431 and the D-FF 433.

The adding circuit 432 adds an offset value input from the offset calculator 41 to a calculation result of the adding circuit 431. A calculation result (coordinate calculation result) of the adding circuit 432 has a value corresponding to the right-hand side of (Eq. 7).

The comparators 44A to 44D determine whether or not the inequalities of (Eq. 3) to (Eq. 6) corresponding to respective lines are satisfied.

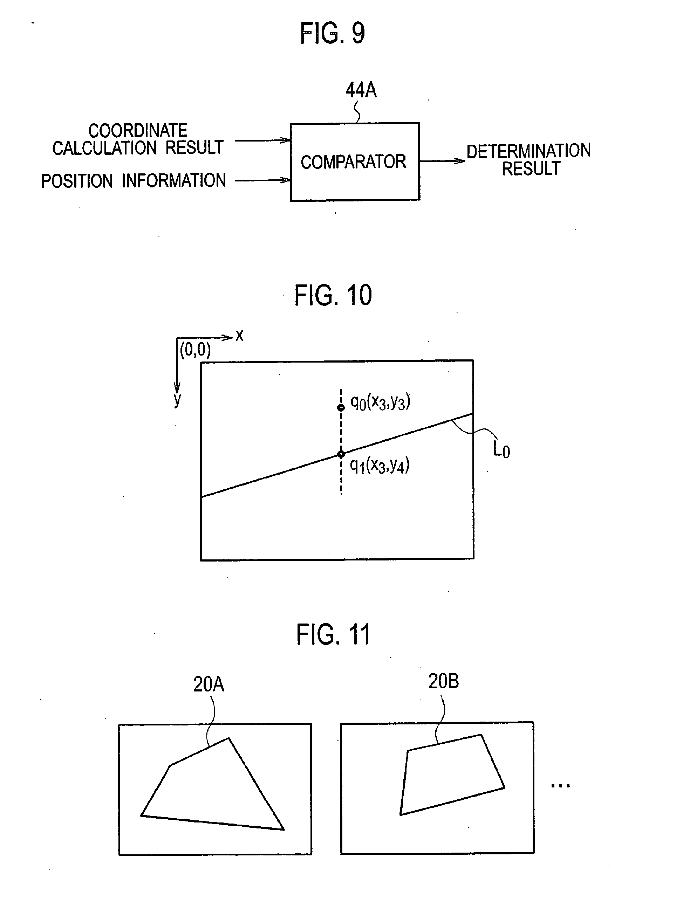

For example, in a case where the comparators 44A to 44D are respectively associated with (Eq. 3) to (Eq. 6), the comparator 44A determines whether or not the inequality of (Eq. 3) is satisfied based on a coordinate calculation result input from the coordinate calculator 43A and position information input from the counter 42 as shown in FIG. 9. If the inequality is satisfied, the comparator 44A outputs a logical "1" as a determination result. If the inequality is not satisfied, the comparator 44A outputs a logical "0" as the determination result. As well, the comparators 44B to 44D respectively determine whether or not the inequalities of (Eq. 4) to (Eq. 6) are satisfied, and then output a logical "1" or "0" as a determination result.

As shown in FIG. 10, in a case where a pixel position (coordinate) designated by the counter 42 is defined as $q_0 (x_3, y_3)$, a coordinate calculation result of the coordinate calculator 43A has "$y_4$" which is a coordinate value in y-direction (vertical direction) of a point $q_0 (x_3, y_4)$ corresponding to "$x = x_3$" on the line $L_0$ associated with the coordinate calculator 43A. The determination processing as to whether or not the inequality in the comparator 44A is satisfied is carried out by comparing "$y_3$" with "$y_4$" to determine whether or not "$q_0$" is located at a mask region side with respect to the line $L_0$. If "$q_0$" is located at the mask region side, the logical "1" is output as the determination result. The coordinate calculators 43B to 43D and the comparators 44B to 44D have the similar processing. If "$q_0$" is located at the mask region surrounded by respective lines, all outputs from the comparators 44A to 44D have the logical "1".

If all determination results input from the comparators 44A to 44D have the logical "1", the AND circuit 45 outputs a logical "1" representing that a pixel position (coordinate) designated by the counter 42 is located in the mask region. In any other cases, the AND circuit 45 outputs a logical "0".

A determining unit that determines whether or not each pixel in an image signal is included in the mask region is composed of the comparators 44A to 44D and the AND circuit 45 described above.

Next, the operation of image processing apparatus 1 will be described.

In a state where a mask region is not set, the image processing apparatus 1 displays an image on the monitor 6 without change based on an image signal obtained by the image obtaining unit 2. A user operates the operation input unit 3 to designate respective points to be positions of vertices of a mask region while watching the display screen of the monitor 6. In the present embodiment, four points are designated.

When the four points to be the vertices of the mask region are designated, the offset calculator 41 of the mask information generator 4 calculates slopes and offsets of four lines corresponding to respective sides of quadrangle having the four points as vertices thereof according to the calculation using the block position converter 411, the subtracting circuit 412, the table 413, the multiplying circuits 414 and 415 and the adding circuit 416, and then outputs values of the calculated slopes and offsets to the coordinate calculators 43A to 43D corresponding to the respective lines.

Next, as described above, each of the coordinate calculators 43A to 43D carries out accumulation and addition of the slope "$(\alpha/\beta)$" of the corresponding line using the adding circuit 431 and the D-FF 433 to calculate the variable part "$(\alpha/\beta)$ x" of the right-hand side of (Eq. 7), adds the value of offset to the calculated value using the adding circuit 432, and outputs a coordinate calculation result representing a value corresponding to the right-hand side of (Eq. 7).

Next, the comparators 44A to 44D determines whether or not the inequalities of (Eq. 3) to (Eq. 6) corresponding to the respective lines are satisfied based on the coordinate calculation results input from the coordinate calculators 43A to 43D and position information input from the counter 42. If the inequalities are satisfied, the comparators 44A to 44D output the logical "1" as determination results. If the inequalities are not satisfied, the comparators 44A to 44D output the logical "0" as determination results.

Then, if all determination results input from the comparators 44A to 44D are the logical "1", the AND circuit 45 outputs the logical "1" as mask information. In the other cases, the AND circuit 45 outputs the logical "0".

For the image signal input from the image obtaining unit 2, the masking unit 5 carries out masking for each pixel whose mask information input from the mask information unit 4 is the logical "1", using a mask image, or outputs the image signal without change for each pixel whose mask information is the logical "0". Thereby, an image where a mask region has been subject to masking is displayed on the display screen of the monitor 6. As the mask image, an image in which a mask region is painted a specific color or a mosaic image may be adopted.

As described above, in the present embodiment, since the masking is carried out within a polygon having as vertices thereof respective points designated on the display screen by user's operation, a user can set various regions having different shapes as the mask region.

Also, since the mask information generator 4 that carries out the processing for defining lines corresponding to respective sides of a polygon which is a mask region, the processing for determining the mask region and the like is configured by a circuit composed of the adding circuit, the subtracting circuit, the multiplying circuit and the like as shown in FIGS. 5, 6, 8 and 9, the mask information generator 4 can be realized in small circuit scale. Further, the masking processing can be carried out in real time.

Thus, according to the present embodiment, it is possible to increase the degree of freedom of shape setting for a region to be subject to masking in an image while suppressing the increase of configuration of apparatus.

It is noted that a user can arbitrary designate a point to be a vertex of a mask region on the display screen of the monitor 6. For example, a user interface may be provided, wherein the user interface allows a user to operate the operation input unit 3 to select any one of mask shapes 20A, 20B ⋯ shown in FIG. 11 displayed on the display screen, move a vertex of the selected mask shape as necessary, and then designate positions of vertices.

**Reference Signs List**

| | |
|---|---|
| 1 | image processing apparatus |
| 2 | image obtaining unit |
| 3 | operation input unit |
| 4 | mask information generator |
| 5 | masking unit |
| 6 | monitor |
| 41 | offset calculator |
| 42 | counter |
| 43A to 43D | coordinate calculators |
| 44A to 44D | comparators |

| 45 | AND circuit |
|---|---|
| 411 | block position converter |
| 412 | subtracting circuit |
| 413 | table |
| 414, 415 | multiplying circuits |
| 416, 431, 432 | adding circuits |
| 417, 418, 433 | D-FFs |

**Claims**

1. An image processing apparatus comprising:

an image obtaining unit configured to obtain an image signal and a synchronization signal thereof;
a designating unit configured to designate three or more points on a display screen where an image based on the image signal is displayed, according to user's operation;
a defining unit configured to define lines which become respective sides of a polygon of which the points designated by the designating unit become vertices;
a coordinate designating unit configured to designate a coordinate in a horizontal direction and in a vertical direction of each pixel in the image signal on the display screen based on the synchronization signal;
a coordinate calculator configured to calculate a value of a coordinate on each of the lines, which has a value of the coordinate designated by the coordinate designating unit in one direction of the horizontal direction and the vertical direction of each pixel, in the other direction different from the one direction;
a determining unit configured to compare a value of the coordinate designated by the coordinate designating unit in the other direction of each pixel with the value of the coordinate on each of the lines calculated by the coordinate calculator, to determine whether or not each pixel in the image signal is included in a mask region which is a region within the polygon surrounded by the lines; and
a masking unit configured to carry out masking using a mask image with respect to each pixel included in the mask region.

2. An image processing method in an image processing apparatus that obtains an image signal and a synchronization signal thereof, designates a coordinate in a horizontal direction and in a vertical direction of each pixel in the image signal on a display screen based on the synchronization signal using a coordinate designating unit, and displays an image based on the image signal on the display screen, the method comprising:

designating three or more points on the display screen according to user's operation to define lines which become respective sides of a polygon of which the designated points become vertices;
calculating a value of a coordinate on each of the lines, which has a value of the coordinate designated by the coordinate designating unit in one direction of the horizontal direction and the vertical direction of each pixel, in the other direction different from the one direction;
comparing a value of the coordinate designated by the coordinate designating unit in the other direction of each pixel with the value of the coordinate on each of the lines calculated by the calculating, to determine whether or not each pixel in the image signal is included in a mask region which is a region within the polygon surrounded by the lines; and
carrying out masking using a mask image with respect to each pixel included in the mask region.

## FIG. 1

1

```
   3                    4                    5                    6
┌──────────┐      ┌──────────┐      ┌──────────┐      ┌──────────┐
│OPERATION │      │  MASK    │      │          │      │          │
│          │ ───> │INFORMATION│ ──> │ MASKING  │ ──> │ MONITOR  │
│INPUT UNIT│      │GENERATOR │      │  UNIT    │      │          │
└──────────┘      └──────────┘      └──────────┘      └──────────┘
                        ▲                 ▲
                        │     2           │
                        │    ┌──────────┐ │
                        │    │  IMAGE   │ │
                        └────│OBTAINING │─┘
                             │  UNIT    │
                             └──────────┘
```

## FIG. 2

REGION B
(UPPER SIDE OF LINE L)

$p(x_p, y_p)$

$(0,b)$

$L : y = ax + b$

REGION A
(LOWER SIDE OF LINE L)

$y$

$x$

$0$

## FIG. 3

$L_2 : y = a_2x + b_2$

$y$

$L_3 : y = a_3x + b_3$

REGION C

$L_0 : y = a_0x + b_0$

$x$

0

$L_1 : y = a_1x + b_1$

## FIG. 4

$y$

$L$

$(0,z)$

$p_0(x_0, y_0)$

$p_1(x_1, y_1)$

$x$

0

## FIG. 5

EP 2 560 365 A1

## FIG. 6

$x_0$

$x_1$

$y_0$

$y_1$

411 — BLOCK POSITION CONVERTER

412 — SUBTRACTING CIRCUIT

$\beta$

$\alpha$

413 — TABLE

$1/\beta$

414 — MULTIPLYING CIRCUIT

$\alpha/\beta$

415 — MULTIPLYING CIRCUIT

$-(\alpha/\beta)\cdot x_0$

416 — ADDING CIRCUIT

$-(\alpha/\beta)\cdot x_0+y_0$

417 — D-FF → OFFSET

418 — D-FF → SLOPE

41

# FIG. 7

BLOCK
(16 × 16 PIXELS)

# FIG. 8

# FIG. 9

44A

COORDINATE
CALCULATION RESULT →

POSITION INFORMATION →

| COMPARATOR |

→ DETERMINATION
RESULT

# FIG. 10

$(0,0)$ → x

y

$q_0(x_3,y_3)$

$q_1(x_3,y_4)$

$L_0$

# FIG. 11

20A

20B

...

<div align="center">

**INTERNATIONAL SEARCH REPORT**

</div>

| | International application No. |
|---|---|
| | PCT/JP2011/056339 |

**A. CLASSIFICATION OF SUBJECT MATTER**
*H04N5/225*(2006.01)i, *H04N5/232*(2006.01)i, *H04N5/262*(2006.01)i, *H04N7/18*(2006.01)n

According to International Patent Classification (IPC) or to both national classification and IPC

**B. FIELDS SEARCHED**

Minimum documentation searched (classification system followed by classification symbols)
H04N5/225, H04N5/232, H04N5/262, H04N7/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-15362 A (Hitachi, Ltd.), 15 January 2004 (15.01.2004), entire text; all drawings & US 2003/0227555 A1 | 1-2 |
| A | JP 2005-135014 A (Hitachi Kokusai Electric Inc.), 26 May 2005 (26.05.2005), entire text; all drawings & KR 10-2005-0040722 A & CN 1612165 A | 1-2 |
| A | JP 2000-324391 A (Sony United Kingdom Ltd.), 24 November 2000 (24.11.2000), paragraphs [0066] to [0076]; fig. 4 to 5, 24 & US 6356125 B1 & GB 2348770 A & DE 10015967 A | 1-2 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 April, 2011 (04.04.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005229351 A